Europäisches Patentamt

European Patent Office

Office européen des brevets

(11) Publication number: **0 565 518 B1**

# EUROPEAN PATENT SPECIFICATION

(45) Date of publication of patent specification: **15.02.95** (51) Int. Cl.⁶: **C22B 3/20**, G03C 5/395

(21) Application number: **90914663.1**

(22) Date of filing: **10.10.90**

(86) International application number:
**PCT/CA90/00347**

(87) International publication number:
**WO 91/05882 (02.05.91 91/10)**

(54) PHOTOGRAPHIC FIXER REGENERATION.

(30) Priority: **12.10.89 CA 200527**

(43) Date of publication of application:
**20.10.93 Bulletin 93/42**

(45) Publication of the grant of the patent:
**15.02.95 Bulletin 95/07**

(84) Designated Contracting States:
**AT BE CH DE DK ES FR GB GR IT LI LU NL SE**

(56) References cited:
**DE-A- 3 718 583**

(73) Proprietor: **The Governors of the University of Alberta**
**1-3 University Hall**
**Edmonton,**
**Alberta T6G 2J9 (CA)**

(72) Inventor: **KUNDA, Wasyl**
**9227-72 Street**
**Edmonton, Alberta T6B 1Y8 (CA)**
Inventor: **ETSELL, Thomas, H.**
**3508-117A Street**
**Edmonton, Alberta T6J 1V4 (CA)**

(74) Representative: **Darby, David Thomas et al**
**Abel & Imray**
**Northumberland House**
**303-306 High Holborn**
**London WC1V 7LH (GB)**

## Description

FIELD OF THE INVENTION

This invention relates to the use of a hydrosulfide reagent to precipitate silver sulfide ($Ag_2S$) from spent photographic fixer solutions. The reagent provides a source of water soluble hydrosulfide ions ($HS^-$). The reaction of the $HS^-$ with fixer solution containing silver results in precipitation of $Ag_2S$, maintenance of the pH level and regeneration of the thiosulfate in the fixer solution. This enables recycling of the fixer solution.

BACKGROUND OF THE INVENTION

Silver recovery, from the spent fixer solution used to develop various types of photographic films, including black and white, colour and X-ray films is done for economic reasons and to prevent the discarding of hazardous waste containing silver or components of a bleach fixer solution. Current technologies for the recovery of silver from the fixer include metallic replacement and electrolytic plating. These have the disadvantages of high capital and maintenance costs, inefficient recovery of silver and an inability to recycle the fixer solution.

It is known how to extract silver from aqueous thiosulfate solutions using such materials as aluminum, aluminum alloys, organic phase containing a quaternary ammonium compounds and sulfide ions. In addition, publications describe the regeneration of spent photographic fixing solution using electrolysis. Some methods provide for limited fixer recycling. Representative methods in this area are as follows:

1. Morana, Simon J. "Silver Recovery from Waste Film by Burning", Precious Met, Proc. Int. Precious Met. 1981 pp. 369-377.

2. Kunda, W. and Etsell T.H. "Recovery of Silver from X-Ray Film", Precious Met, (Proc. 9th Int. Precious Met. Inst. Conf.), 1985 (Pub. 1986), 289-304.

3. Kunda, W. "Processing of Photographic Spent Solution by Chemical Method", Precious Met. (Proc. 7th Int. Precious Met. Conf.) 1983, (Pub. 1984) 185-95.

4. Nobuaki Terai, Japanese Patent Application 63045121.

Photographic processing of various types of photographic films, including black and white, colour and X-ray films involves development of the image by decomposition of silver halide crystals to metallic silver and the removal of unused silver halides from the film. For example, during processing about 33 1/3% to 40% of the silver remains on the film and the remaining 60% to 66 2/3% is washed into the photographic fixer solution. Discarding of the solution is a problem in that the silver is lost and discharged as pollution into the environment. Silver is currently recovered from the fixer solution using a two stage electrolysis followed by either metallic replacement using cartridges filled with iron wires, or ion exchange to remove residual silver. Electrolysis is costly in capital outlay and in operating costs. The silver recovery is low and environmental problems remain from disposal of the effluent solution. Electrolytic plating allows for some fixer recycling, but electroplating causes a lowering of the pH of the fixer solution and a consumes both sulfite ($SO_3^{-2}$) and thiosulfate resulting in a decrease in the fixation rate and the amount of silver that can be stripped from the film.

Previous work has shown that compounds, such as $Na_2S$ and $H_2S$, which dissociate into sulfide ions, are effective reagents for removing silver from solution in a chemical process. Problems with this process involve formation or use of poisonous hydrogen sulfide ($H_2S$) gas and the generation of elemental sulfur.

It is known in the prior art that the silver product can then be converted to metallic silver by heat treatment in an air atmosphere at 600°C or by dissolution in nitric acid.

A chemical process, which could selectively remove silver from spent fixer solution without destruction of the thiosulfate in solution and which would allow the fixer to be reused, would have the advantages of lower costs, ease of operation, and a reduced environmental hazard.

SUMMARY OF THE INVENTION

According to an aspect of the invention, a process is provided for recovering silver sulfide from spent photographic fixer solutions, which contain silver. In accordance with claim 1, the process comprises introducing a hydrosulfide reagent, which provides a source of hydrosulfide ions, into the spent fixer solution to precipitate silver sulfide as a non-soluble precipitate. The resultant precipitate is isolated from the spent fixer solution. Sufficient silver is thereby removed from the spent fixer solution and sufficient thiosulfate is regenerated to enable recycling of the fixer solution. For this purpose, the amount of hydrosulfide ions added to the fixer solution is less than that which would render the thiosulfate unsuitable for reuse in a fixer solution.

According to another aspect of the invention, the process is particularly suited for treating spent photographic fixer solutions which contain thiosulfate and in particular sodium or ammonium thiosulfate. The hydrosulfide reagent is preferably either sodium, potassium or ammonium hydrosulfide. The hydrosulfide reagent precipitates silver in the form of silver sulfide while maintaining pH and thiosulfate levels in the fixer to allow for reuse.

According to another aspect of the invention, the quantity of hydrosulfide reagent used is less than 1.0 mole per mole of silver in the fixer solution.

BRIEF DESCRIPTION OF THE DRAWINGS

Figures 1(a) and 1(b) represent the precipitation of silver from fixer solution using two types of fixer solutions;

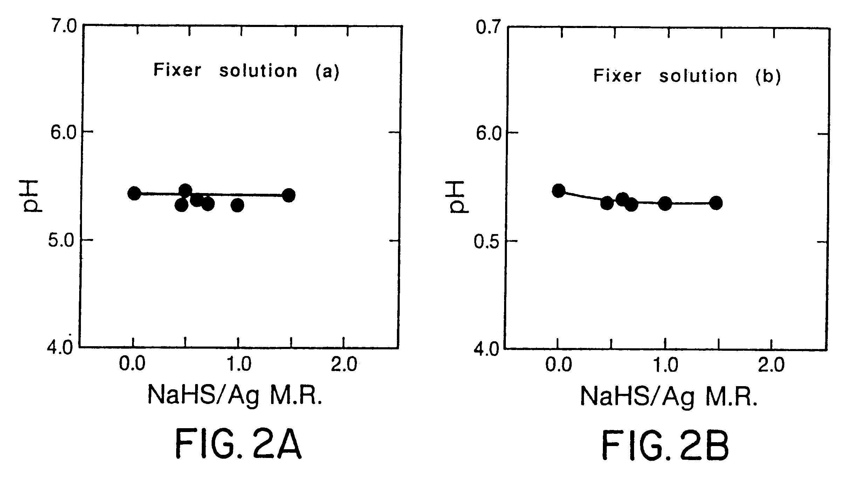

Figures 2(a) and 2(b) represent the change in pH using various concentrations of NaHS reagents in the two types of fixer solutions of Figure 1; and

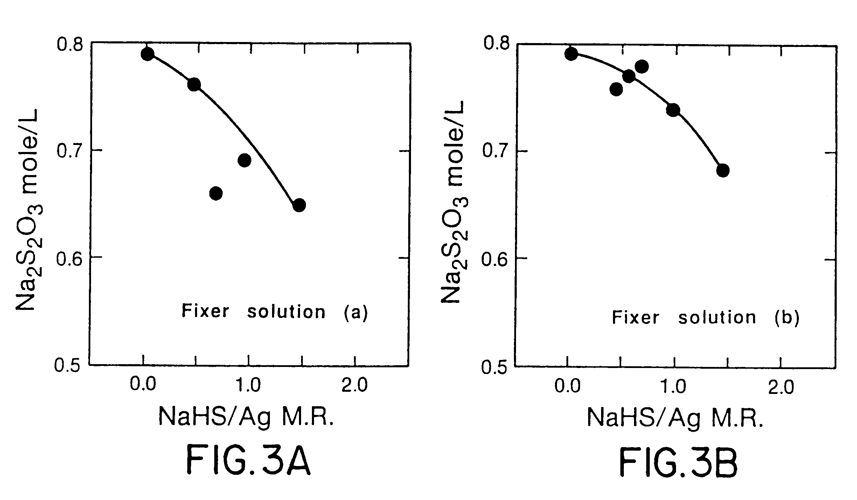

Figures 3(a) and 3(b) represent depletion of sodium thiosulfate in fixer solution using various concentrations of NaHS reagents in the two types of fixer solutions of Figure 1.

DETAILED DESCRIPTION OF THE PREFERRED EMBODIMENTS

The photographic processing of various types of films, including black and white, colour and X-ray films involves the development of an image by decomposition of silver halide crystals to metallic silver and the removal of the unused siver halides from the film. Photographic fixer solutions are used in the photographic industry to dissolve the residual silver halide (AgCl, AgBr, or AgI) from the photographic film which is being processed. A variety of photographic fixer solutions have been used over the years. The most common form of photographic fixer solution involves the use of either sodium thiosulfate or ammonium thiosulfate to dissolve the residual silver halide from the film. Other types of photographic fixer solutions are also commonly available. Those solutions include fixer solution used by the oil industry and the bleach-fix and colour-fix systems used in the colour photographic processing industry. All of these fixer solutions dissolve silver halide from the film. After use, therefore they include silver ions which, in accordance with this invention, may be precipitated from the spent fixer solution by use of the hydrosulfide reagent of this invention. By "spent fixer solution" is meant fixer solution which has been used for fixing film.

With the thiosulfate-types of fixer solutions, for example, sodium thiosulfate and ammonium thiosulfate, which are commonly used in photographic fixer solutions, the time required to clean the film (that is to dissolve residual silver halides) is related to the concentration of available thiosulfate in the fixer solution. The silver halide, as removed from the film forms silver thiosulfate complexes such as $AgNaS_2O_3$ or $AgNH_4S_2O_3$, the build up of which delays the clearance time of the film. It is therefore important to remove silver from the fixer solution to ensure sufficient concentration of the uncomplexed thiosulfate to expediently clean the film during the fixing process.

In accordance with this invention, a hydrosulfide reagent, which provides a source of hydrosulfide ions reacts with the various silver thiosulfate complexes to produce silver sulfide without significantly degrading the thiosulfate component of the fixer solution or significantly altering the pH. Examples of such hydrosulfide reagents include: sodium hydrosulfide, potassium hydrosulfide or ammonium hydrosulfide. Hence, the fixer solution as treated in accordance with this invention, may be recycled for use as a fixer solution in the photographic development process. This significantly cuts down on the cost of the fixer solution as well as reducing pollution in the environment. In the prior systems for recovering silver, the spent fixer solution with a portion of the silver removed therefrom had to be discarded because, in the process of recovering the silver, the thiosulfate component was degraded into compounds which could not be recycled.

In accordance with this invention, the hydrosulfide reagent as used to treat the fixer solution is readily available as a concentrate or in its hydrated form. For example, sodium hydrosulfide is available commercially as a 47.5% concentrate solution which can be readily diluted to the desired use solution, such as a two molar solution. Sodium hydrosulfide may also be commercially obtained as a hydrated salt in the form of $NaHS \cdot 0.89\ H_2O$. This salt may be dissolved in water to provide the desired concentration of solution such as a two molar solution. Alternatively, the sodium hydrosulfide may be prepared by reacting $H_2S$ gas with sodium hydroxide. Similarly potassium hydrosulfide and ammonium hydrosulfide may be prepared by reacting a solution of potassium hydroxide (KOH) or ammonium hydroxide, respectively with hydrogen sulfide ($H_2S$) gas. In aqueous solution the hydrosulfide reagents will dissociate to provide water soluble hydrosulfide ions.

Although the silver is complexed with the thiosulfate, it is believed that the hydrosulfide ions, in one manner or another, reacts with the various silver thiosulfate complexes to produce silver sulfide. In this solution, the silver sulfide is not soluble; hence it precipitates and forms a mass which may be easily filtered or readily settles out of solution.

Although the invention is not intended to be limited by any particular theory, it is suggested that an equation which represents the chemical reaction is as follows:

$$2AgNaS_2O_3 + NaHS \rightarrow Ag_2S + Na_2S_2O_3 + NaHS_2O_3$$

The hydrosulfide reagent in this particular equation represented as sodium hydrosulfide preferentially reacts with the silver sodium thiosulfate complex and does not react in any significant way with other components of the fixer solution. Although sodium hydrosulfide will also react with sodium thiosulfate, this reaction is minimized because of the preferential reaction of sodium hydrosulfide with the silver sodium thiosulfate. It has been found that excessive amounts of sodium hydrosulfide, if introduced to the spent fixer solution, will react with the sodium thiosulfate to degrade the thiosulfate to elemental sulfur which is not desirable.

If it is desired to maintain the concentration of the thiosulfate in the fixer solution, particularly for purposes of recycling, it is important to control the quantity of hydrosulfide reagent used in precipitating silver. In accordance with this invention, the use of up to 1 mole of sodium hydrosulfide per one mole of silver in the fixer solution (which can be determined by pretreatment analysis), results in relatively little degradation of the thiosulfate. Amounts of sodium hydrosulfide in excess of one mole results in increasing degradation of the thiosulfate. The preferred range of hydrosulfide reagent in the solution is approximately 0.5 moles to 1.0 moles per mole of silver in the fixer solution.

Other parameters, which can influence the effectiveness of the process, are the rate of introduction of the hydrosulfide reagent to the fixer solution, the degree of agitation of the solution and the pH of the spent fixer solution prior to treatment. It is preferred that the rate of introduction of the hydrosulfide reagent to the spent fixer solution be at a rate which is slow enough, depending upon the conditions, to avoid evolution of $H_2S$ gas.

It has also been found that to minimize the degradation of the thiosulfate, the fixer solution should preferably be agitated. The degree of agitation contemplated is that produced by a mechanical ultrasonic or gas bubbling means. Mechanical stirrers, recirculating pumps, ultrasonic stirrers, ultrasonic vibration devices or gas bubbles through the system create sufficient agitation to ensure good mixing of the introduced hydrosulfide with the fixer solution to eliminate any pockets of high concentration of the hydrosulfide reagent and thereby ensure that the preferential reaction with the silver complex proceeds.

In accordance with another aspect of the invention, it is desirable that the pH of the fixer solution should be above 4.0. When the pH of the fixer solution is below 4.0, formation of hydrogen sulfide gas can be a problem. The formation of the gas can affect the precipitation of silver from the solution and also detracts from the overall efficiency of treating the fixer solution.

Although the above comments have been directed specifically towards the use of sodium hydrosulfide to precipitate silver from a silver sodium thiosulfate complex, the invention contemplates the use of other hydrosulfide reagents i.e. compounds which provide hydrosulfide ion to the fixer solution. Thus, for example potassium hydrosulfide or ammonium hydrosulfide may also be used in treating silver-bearing thiosulfate complexes and sodium hydrosulfide, potassium hydrosulfide or ammonium hydrosulfide may be used in treating silver as it exists in other types of fixer solutions, such as the bleach-fix or colour-fix, as used in the colour photographic processing industry.

It has been found that the temperature of the fixer solution does not have a direct bearing on the precipitation of silver from the fixer solution. Therefore, for convenience, the process may be carried out at room temperature. The silver precipitate in the form of $Ag_2S$ salt forms readily and has very good settling and filtration characteristics. Hence on a commercial scale, the process is very effective in treating fixer solutions and the use of the hydrosulfide reagent does not degrade to any appreciable extent the thiosulfate in the solution. This permits the treated fixer solution to be recycled readily for reuse in the photographic development process, with minimal make-up of thiosulfate. This prevents significant problems presently encountered with regards to disposal of the spent fixer solution, avoiding pollution problems normally occurring in disposal of the fixer solutions in the standard form of waste treatment systems. Economies are also realized in recovery of silver as a precipitate. These features could not all be effectively accomplished simultaneously with the prior types of treatment.

The silver may be recovered from the precipitate by a number of methods known in the art. For example the precipitate may be calcined at temperatures ranging from 300 °C to 600 °C to convert silver sulfide to silver. Alternatively, the silver can be recovered by dissolving the precipiate in nitric acid, or by using conventional smelting and refining techniques.

In reusing the fixer, it may be necessary to add a small portion of fresh fixer to replenish the fixer prior to recycling.

The following Table 1 provides an analysis of various types of known fixer solutions after use in developing films. In the fixer solutions number 3 and 4, thiosulfate content was not analyzed, because of the special make-up of these fixer solutions.

TABLE 1

| PHOTOGRAPHIC SOLUTIONS | | | | | |
|---|---|---|---|---|---|
| No. | Description | Composition | | | |
| | | Ag g/L | pH | $Na_2S_2O_3$ Mole/L | |
| 1 | Fixer solution (Kodak)[2] | 2.8 | 5.76 | 0.74 | |
| 2 | Fixer solution (DuPont)[3] | 3.1 | 5.13 | 1.28 | |
| 3 | Fixer solution used by oil industry | 5.0 | 7.54 | n/a[1] | |
| 4 | Bleach fixer (from colour photo processing industry) | 1.4 | 8.6 | n/a[1] | |

NOTE:
1. n/a = not analyzed
2. Fixer solution used for manual operation
3. Fixer solution used for automatic operation (hospitals)

The following examples illustrate the best modes contemplated for carrying out this invention, but are not to be construed as limiting.

Example 1

The fixer solutions of Table 1 were treated in accordance with this invention to precipitate silver sulfide. A 3 molar solution of sodium hydrosulfide was used for treating under various conditions either 0.5 or 17.5 liter charges of the fixer solution. The solutions were measured and charged into a glass jar equipped with a mechanical stirrer. The measured quantity of NaHS reagent was slowly injected into the agitating solution. Within a few minutes the precipitation of $Ag_2S$ was completed. The slurry was stored from 10 minutes to one hour depending upon the precipitation conditions. All reactions were carried out at room temperature. The clear solution was decanted and analyzed for Ag, $Na_2S_2O_3$ and the pH was determined. The silver residue was discharged, filtered and analyzed for content. A summary of the results of these treatments is provided in Table 2.

EP 0 565 518 B1

**TABLE 2**

Recovery of silver from various photographic spent solutions by precipitation
with 3M solution of sodium hydrosulphide under preferential conditions.

| Solution No. | Charge | | Head Solution | | Discharge Solution | | | Silver Recovery % | Silver Residue g |
|---|---|---|---|---|---|---|---|---|---|
| | Phot. Sol. L | NaHS ml | Ag g/L | $Na_2S_2O_3$ | Ag g/l | $Na_2S_2O_3$ Mole/L | pH | | |
| 1 | 1.0 | 10 | 2.8 | 0.74 | 0.008 | 0.72 | 5.80 | 99.7 | 3.50 |
| 2 | 1.0 | 10 | 3.1 | 1.30 | 0.02 | 1.23 | 5.96 | 99.6 | 6.57 |
| 3 | 17.5 | 311 | 5.0 | n/a | 0.0006 | n/a | 7.80 | 99.9 | 103.5 |
| 4 | 1.0[1] | 10 | 2.0 | n/a | 0.008 | n/a | 7.00 | 99.6 | 3.90 |

NOTE:  1) Mixture of bleach-fixer and fixer solutions in ratio 1:1.

Example 2

According to the procedure of Example 1, spent fixer solutions, which usually contain 0.75 moles per liter for manual photographic process development, or 1.3 moles per liter of thiosulfate for automatic photographic processing operation, were treated. Various quantities of NaHS were used to determine the effect on the sodium thiosulfate during precipitation of the silver.

The results of these treatments for a fixer solution containing 0.74 moles per liter of thiosulphate are presented in Table 3. It is apparent that in the filtrate, the concentration of thiosulfate dropped off considerably once the molar ratio of NaHS/Ag exceeded 2 and that when silver in solution decreased below 0.01 grams per liter, the sodium hydrosulfide began to react with the sodium thiosulfate reducing $S_2O_3{}^{-2}$ to elemental sulfur. The addition, however, of a preferred amount of 0.5 to 1 mole of NaHS per mole of silver in the fixer solution does not appreciably destroy the sodium thiosulfate; hence the fixer solution as treated can be recycled. When the sodium thiosulfate concentration does decrease below the required level, replenishing with fresh fixer or sodium thiosulfate can enhance the operation of the recycled fixer solution.

TABLE 3

Precipitation of silver from spent solution with 3 molar sodium hydrosulfide (NaHS) solution. Effect of NaHS/AgNaS$_2$O$_3$ molar ratio on recovery of silver and on behaviour of Na$_2$S$_2$O$_3$.

| Test No. | Charge | | | Filtrate | | | Silver Residue g | Silver Recovery %[2] | Clearing Time sec[3] |
|---|---|---|---|---|---|---|---|---|---|
| | Fixer Sol. (L) | NaHS ml | NaHS/AgNaS$_2$O$_3$ M.R.[1] | Ag g/L | Na$_2$S$_2$O$_3$ mole/L | pH | | | |
| | Head Solution | | | 2.8 | 0.74 | 5.76 | | | |
| 1 | 1.0 | 4 | 0.44 | 0.044 | 0.72 | 5.57 | 2.09 | 98.5 | 3.5 |
| 2 | 1.0 | 10 | 1.15 | 0.008 | 0.72 | 5.80 | 3.50 | 99.7 | 2.6 |
| 3 | 1.0 | 20 | 2.30 | 0.005 | 0.66 | 6.20 | 4.30 | 99.8 | 2.0 |
| 4 | 1.0 | 25 | 2.88 | 0.009 | 0.65 | 6.15 | 4.52 | 99.7 | 5.0 |
| 5 | 1.0 | 30 | 3.46 | 0.004 | 0.64 | 6.59 | 5.91 | 99.9 | 8.0 |

NOTE:

1) M.R. - molar ratio

2) Silver recovery calculated on solution basis

3) Time (sec.) for removal of silver halide from the film

Example 3

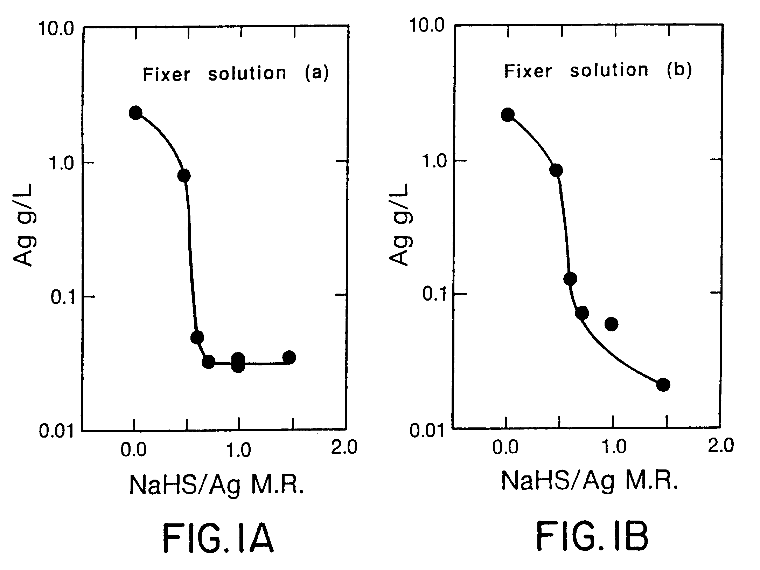

Various quantities of 2 molar NaHS solutions were slowly injected into jars each filled with 1 liter each of spent fixer solution and equipped with a mechanical stirrer. Agitation was discontinued and the treated solution was allowed to settle for approximately 10 to 30 minutes. After decantation the thickened slurry was filtered, washed, dried and analyzed by X-ray diffraction to identify the silver compounds. The filtrate was analyzed for silver, pH and sodium thiosulfate ($Na_2S_2O_3$). The results in Table 4 and Figure 1 show that the most important parameter is the quantity of NaHS reagent. One mole of NaHS will precipitate 2 moles of silver. The destruction of $Na_2S_2O_3$ can be controlled by avoiding an excess of NaHS. Losses of sodium thiosulfate should be replenished to the original composition by the addition of $Na_2S_2O_3$.

Agitation and the slow introduction of NaHS are preferred aspects of the process since these conditions eliminate the formation of $H_2S$ and decomposition of $Na_2S_2O_3$.

A pH lower than 4.0 promotes formation of $H_2S$ and causes incomplete precipitation of silver. The various quantities of reagent used all carried out the stripping of silver from silver bearing solution at a pH above 4.0.

The precipitation of silver can be carried out at room temperature.

TABLE 4

Stripping of silver from Fixer Solution with NaHS

Head Materials:
1. Fixer solution: $Ag$ = 2.2 g/L (0.204 mole/L); pH = 5.43; $Na_2S_2O_3$ = 0.79 moles/L
2. Stripping reagent: (a) 47.5% NaHS diluted with water to 2 M concentration.
(b) NaHS 0.89 $H_2O$ salt dissolved to 2 M concentration.

| Test No. | Charge | | | Filtrate | | | | Residue | | |
|---|---|---|---|---|---|---|---|---|---|---|
| | Fixer L | NaHS[1] ml | NaHS[1] mol/L | Ag[3] g/L | pH | $Na_2S_2O_3$ mole/L | NaHS/Ag M.R. | Weight g | Ag[2] g | X-ray Analysis |
| 1 | 1.0 | 5 | 0.010 | 0.810 | 5.46 | 0.76 | 0.49 | 1.59 | 1.39 | $Ag_2S$ |
| 2 | 1.0 | 6 | 0.012 | 0.052 | 5.34 | 0.72 | 0.59 | 2.48 | 2.15 | $Ag_2S$ |
| 3 | 1.0 | 7 | 0.014 | 0.033 | 5.33 | 0.66 | 0.69 | 2.54 | 2.23 | $Ag_2S$ |
| 4 | 1.0 | 10 | 0.020 | 0.033 | 5.31 | 0.69 | 0.98 | 2.49 | 2.17 | $Ag_2S$ |
| 5 | 1.0 | 15 | 0.030 | 0.038 | 5.46 | 0.65 | 1.47 | 2.49 | 2.17 | $Ag_2S$ |
| 6 | 1.0 | 5 | 0.010 | 0.840 | 5.36 | 0.76 | 0.49 | 1.15 | 1.38 | $Ag_2S$ |
| 7 | 1.0 | 6 | 0.012 | 0.107 | 5.38 | 0.77 | 0.59 | 1.75 | 1.52 | $Ag_2S$ |
| 8 | 1.0 | 7 | 0.014 | 0.074 | 5.36 | 0.78 | 0.69 | 2.00 | 1.74 | $Ag_2S$ |
| 9 | 1.0 | 10 | 0.020 | 0.065 | 5.34 | 0.74 | 0.98 | 2.55 | 2.22 | $Ag_2S$ |
| 10 | 1.0 | 15 | 0.030 | 0.021 | 5.37 | 0.68 | 1.47 | 2.40 | 2.08 | $Ag_2S$ |

NOTE:
1) Stripping agents a) used in Test Nos. 1 to 5 and b) in Test Nos. 6 to 10.
2) Silver in residue was calculated assuming that the residue is composed of $Ag_2S$ containing 87.06% silver.
3) Silver fixer solution was analyzed by A.A. Spectrophotometry.

Example 4

Spent fixer solutions containing:
a) 0.7 molar sodium thiosulfate, or

b) 0.7 molar sodium thiosulfate and 0.35 molar ammonium thiosulfate were treated with sodium hydrosulfide as outlined in Table 5. The results of these treatments are shown in Table 5.

**TABLE 5**

| Test No. | Charge | | | | Filtrate | |
|---|---|---|---|---|---|---|
| | Fixer ml | | NaHS | | | |
| | a | b | ml | NaHS/AgNaS$_2$O$_3$ M.R. | Ag (g/L) | pH |
| | | | | | Head 3.0 | 5.5 |
| 1 | 1,000 | 1,000 | 7<br>7 | 0.5<br>0.5 | 0.060<br>0.040 | 5.4<br>5.4 |
| 2 | 1,000 | 1,000 | 30<br>30 | 2.13<br>2.13 | 0.004<br>0.002 | 6.2<br>6.2 |

Example 5

A 2 molar solution of potassium hydroxide (KOH) was prepared by dissolving 112.22g of KOH in 1 litre of water. The pH of the KOH solution was 13.6. Hydrogen sulfide (H$_2$S) gas was slowly injected into the KOH solution until the pH started to decrease to about 8. The poisonous and unpleasant smell of H$_2$S gas was avoided by adding no more than one mole of H$_2$S per mole of KOH. The H$_2$S gas reacted with the KOH to form potassium hydrosulfide according to the reaction:

$$KOH + H_2S \rightarrow KHS + H_2O$$

The potassium hydrosulfide (KHS) solution was used for precipitation of the silver from fixer solution. Three glass jars were each filled with 1 litre of fixer solution. The KHS solution was injected into the three jars in different quantities: 5 ml, 10 ml and 15 ml, respectively. Silver precipitated immediately from fixer solution in all three jars. The settling of solids with 5 ml reagent was very slow, with 15 ml was intermediately slow, and with 10 ml was very fast (approximately 5 minutes). The results of the treatment of fixer solution with the potassium hydrosulfide reagent are shown in Table 6.

These results show that the KHS reagent also provides hydrosulfide ions, which can be used according to the present invention.

11

## TABLE 6

Table 6. Stripping of Silver from Fixer
Solution using Potassium Hydrosulfide

| Test No. | Charge | | Fixer Solution | | | $Ag_2S$ Residue | | |
|---|---|---|---|---|---|---|---|---|
| | Fixer ml | KHS ml | Ag g/l | $S_2O_3$ mole | pH | Wt g | X-ray | EDA |
| 1 | 1,000 | 5 | 0.710 | 0.75 | 4.6 | 2.4 | $Ag_2S$ | Ag, |
| 2 | 1,000 | 10 | 0.066 | 0.75 | 4.7 | 3.4 | $Ag_2S$ | Ag, S |
| 3 | 1,000 | 15 | 0.052 | 0.75 | 4.8 | 4.3 | $Ag_2S$ | Ag, S |
| Fixer-head | | | 2.8 | 0.75 | 4.85 | - | | |

Although preferred embodiments of the invention are described herein in detail, it will be understood by those skilled in the art that variations may be made thereto without departing from the spirit of the invention or the scope of the appended claims.

**Claims**

1. A process for the regeneration of spent photographic fixer, for reuse, characterized by:
    (a) adding to the spent fixer solution a hydrosulfide reagent, which provides hydrosulfide ions, in an amount which is sufficient to remove silver from silver thiosulfate complexes and less than an amount which would render the thiosulfate unsuitable for reuse in a fixer solution; and
    (b) allowing a precipitate of silver sulfide to form and removing such precipitate from the solution thereby regenerating a reusable photographic fixer solution.

2. The process of claim 1, wherein said fixer solution is a sodium thiosulfate fixer solution.

3. The process of claim 1, wherein said fixer solution is a ammonium thiosulfate fixer solution.

4. The process of any of claims 1 - 3, wherein said hydrosulfide reagent is sodium hydrosulfide.

5. The process of any of claims 1 - 3, wherein said hydrosulfide reagent is potassium hydrosulfide.

6. The process of any of claims 1 - 3, wherein said hydrosulfide reagent is ammonium hydrosulfide.

7. The process of any of claims 1 - 6, wherein the molar ratio of said hydrosulfide reagent to silver is less than 1.0.

8. The process of any of claims 1 - 7, wherein the molar ratio of said hydrosulfide reagent to silver is greater than 0.5.

9. The process of any of claims 1 - 8, wherein fresh fixer solution is added to replenish said fixer solution prior to reusing said fixer solution.

**10.** The process of any of claims 1 - 9, wherein silver is recovered from the precipitate.

**Patentansprüche**

**1.** Verfahren zum Regenerieren von verbrauchtem fotografischem Fixiermittel für die Wiederverwendung, gekennzeichnet durch:

(a) Hinzufügen eines Hydrosulfid-Reagenzmittels, das Hydrosulfidionen in einer Menge vorsieht, die ausreichend ist, Silber aus Silberthiosulfat-Komplexen zu entfernen, und die geringer als eine Menge ist, die das Thiosulfat für die Wiederverwendung in einer Fixiermittellösung untauglich machen würde, zur verbrauchten Fixiermittellösung; und

(b) Ermöglichen der Bildung eines Niederschlags von Silbersulfid und Entfernen eines solchen Niederschlags aus der Lösung, wodurch eine wiederverwendbare fotografische Fixiermittellösung regeneriert wird.

**2.** Verfahren nach Anspruch 1, dadurch gekennzeichnet, daß die Fixiermittellösung eine Natriumthiosulfat-Fixiermittellösung ist.

**3.** Verfahren nach Anspruch 1, dadurch gekennzeichnet, daß die Fixiermittellösung eine Ammoniumthiosulfat-Fixiermittellösung ist.

**4.** Verfahren nach einem der Ansprüche 1 bis 3, dadurch gekennzeichnet, daß das Hydrosulfid-Reagenzmittel Natriumhydrosulfid ist.

**5.** Verfahren nach einem der Ansprüche 1 bis 3, dadurch gekennzeichnet, daß das Hydrosulfid-Reagenzmittel Kaliumhydrosulfid ist.

**6.** Verfahren nach einem der Ansprüche 1 bis 3, dadurch gekennzeichnet, daß das Hydrosulfid-Reagenzmittel Ammoniumhydrosulfid ist.

**7.** Verfahren nach einem der Ansprüche 1 bis 6, dadurch gekennzeichnet, daß das Molverhältnis von Hydrosulfid-Reagenzmittel zu Silber kleiner als 1,0 ist.

**8.** Verfahren nach einem der Ansprüche 1 bis 7, dadurch gekennzeichnet, daß das Molverhältnis von Hydrosulfid-Reagenzmittel zu Silber größer als 0,5 ist.

**9.** Verfahren nach einem der Ansprüche 1 bis 8, dadurch gekennzeichnet, daß zum Auffüllen der Fixiermittellösung vor ihrer Wiederverwendung neue Fixiermittellösung hinzugefügt wird.

**10.** Verfahren nach einem der Ansprüche 1 bis 9, dadurch gekennzeichnet, daß aus dem Niederschlag Silber wiedergewonnen wird.

**Revendications**

**1.** Un procédé pour la régénération d'un fixateur photographique usé, pour la réutilisation, caractérisé en ce qu'il comprend les étapes consistant à:

(a) ajouter à la solution de fixateur usé un réactif hydrosulfure qui fournit des ions hydrosulfure selon une quantité qui est suffisante pour éliminer l'argent des complexes de thiosulfate d'argent et inférieure à une quantité qui rendrait le thiosulfate inapproprié pour la réutilisation dans une solution de fixateur; et

(b) permettre la formation d'un précipité de sulfure d'argent et éliminer un tel précipité de la solution afin de regénérer une solution de fixateur photographique réutilisable.

**2.** Le procédé selon la revendication 1, dans lequel ladite solution de fixateur est une solution de fixateur de thiosulfate de sodium.

**3.** Le procédé selon la revendication 1, dans lequel ladite solution de fixateur est une solution de fixateur de thiosulfate d'ammonium.

4. Le procédé selon l'une quelconque des revendications 1 à 3, dans lequel ledit réactif hydrosulfure est l'hydrosulfure de sodium.

5. Le procédé selon l'une quelconque des revendications 1 à 3, dans lequel le réactif hydrosulfure est l'hydrosulfure de potassium.

6. Le procédé selon l'une quelconque des revendications 1 à 3, dans lequel ledit réactif hydrosulfure est de l'hydrosulfure d'ammonium.

7. Le procédé selon l'une quelconque des revendications 1 à 6, dans lequel le rapport molaire dudit réactif hydrosulfure à l'argent est inférieur à 1,0.

8. Le procédé selon l'une quelconque des revendications 1 à 7, dans lequel le rapport molaire dudit réactif hydrosulfure à l'argent est supérieur à 0,5.

9. Le procédé selon l'une quelconque des revendications 1 à 8, dans lequel de la solution de fixateur frais est ajoutée pour réapprovisionner ladite solution de fixateur avant la réutilisation de ladite solution de fixateur.

10. Le procédé selon l'une quelconque des revendications 1 à 9, dans lequel l'argent est récupéré à partir du précipité.

FIG. IA

FIG. IB

EP 0 565 518 B1

FIG. 2A

FIG. 2B

FIG.3A

FIG.3B

EP 0 565 518 B1